# EUROPEAN PATENT SPECIFICATION

(11) **EP 3 951 322 B1**
(45) Date of publication and mention of the grant of the patent: **30.08.2023**
(21) Application number: 21186827.8
(22) Date of filing: 20.07.2021
(51) Int. Cl.: G01C 23/00, G01C 25/00, G01C 21/16

(54) **SYSTEMS AND METHODS FOR CALIBRATING A SENSOR POSITION ON AN AIRCRAFT**
SYSTEME UND VERFAHREN ZUR KALIBRIERUNG EINER SENSORPOSITION AUF EINEM FLUGZEUG
SYSTÈMES ET PROCÉDÉS D'ÉTALONNAGE DE POSITION D'UN CAPTEUR SUR UN AÉRONEF

(30) Priority: 04.08.2020 IN 202011033342; 28.09.2020 US 202017034277
(43) Date of publication of application: 09.02.2022
(73) Proprietor: Honeywell International Inc., Charlotte, NC 28202 (US)
(72) Inventor: CROUCH, Steven Curtis, Charlotte, 28202 (US); PARTHASARATHY, Sudarshan, Charlotte, 28202 (US); SAHOO, Santosh Kumar, Charlotte, 28202 (US); URBANEC, Jan, Charlotte, 28202 (US)
(74) Representative: LKGlobal UK Ltd.

(56) References cited:
- EP-A1- 2 990 763
- EP-A2- 2 244 239
- EP-A2- 2 515 078
- US-A1- 2016 004 374

## Description

### CROSS REFERENCE TO RELATED APPLICATION

This application claims priority to Indian Provisional Patent Application No. 202011033342, filed August 4, 2020.

### TECHNICAL FIELD

The following disclosure relates generally to the selection of sensors on aircraft, and, more particularly, to systems and methods for calibrating aircraft position by providing touch-enabled selection of onboard sensors on an aircraft.

### BACKGROUND

Modern complex avionics systems generally have a position computer that uses multiple redundant sensor systems to automatically compute an aircraft position. In some scenarios, the crew may desire to interact with this avionics system. In some scenarios, the crew may wish to calibrate the position computer by including or excluding individual sensors from this computation. In these scenarios, they generally must use a user input device and perform a series of operations, navigating back and forth between windows.

The windows that a crew has to navigate between may include a first window with a textual readout of sensor latitude and longitude position in a list format. Using this first window, a sensor position has to be mentally processed by the crew and translated to a relative sensor position with respect to current aircraft position and relative to other onboard sensors to be useful. In some scenarios, the crew may have access to a second window with a graphical representation of positions of onboard sensors relative to a voted, master aircraft position, however even using this window, interacting with the system can be very cumbersome and does not provide a pilot with the ability to see potential data changes reflected in real time as sensor selections are made.

Accordingly, technologically improved systems and methods for calibrating aircraft position by providing touch-enabled selection of onboard sensors on an aircraft that provide a direct and intuitive, touch-based solution for selection of sensors and provide immediate visual feedback are desirable. Furthermore, other desirable features and characteristics of the present invention will be apparent from the subsequent detailed description and the appended claims, taken in conjunction with the accompanying drawings and the foregoing technical field and background.

EP2990763 A1 discloses aircraft navigation system displays with multiple positions for the aircraft on the same display, where each position is determined using a different position sensor.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Provided is a system for calibrating aircraft position by providing touch-enabled selection of onboard sensors on an aircraft having a touch-enabled display unit, the system includes: a number N of position computers, N being greater than 1; a plurality of onboard sensors for providing respective sensor data, the onboard sensors including a global position system (GPS) sensor, an inertial reference system (IRS) sensor, a radio navigation (NAV) sensor, and, for each of the N Position computers, a respective FMS sensor; a controller circuit comprising a processor configured to execute programming instructions stored in a memory, that when executed by the processor cause the controller circuit to: receive sensor map location information for the onboard sensors; receive sensor data from the onboard sensors; configure a user interface layout for the touch-enabled display unit based on the sensor map location information and the sensor data, the user interface layout presenting the N Position computers, the GPS sensor, the IRS sensor, the NAV sensor, and the N FMS sensors, using symbols at respective locations; render the user interface layout on the touch-enabled display unit; interpret a touch input from the touch-enabled display unit to select a position computer and to select an onboard sensor; calibrate the selected Position computer with the selected onboard sensor responsive to the touch input; modify the user interface layout to reflect the calibration; and modify a displayed range ring on the user interface layout responsive to the calibration.

Also provided is a processor-implemented method for calibrating an aircraft position on an aircraft having a touch-enabled display unit. The method includes: receiving sensor map location information for onboard sensors, the onboard sensors including N flight management system (FMS) computers, a geospatial positioning system (GPS) sensor, an instrument radar system (IRS) sensor, a navigation (NAV) sensor, and N FMS sensors; receiving sensor data from the onboard sensors; configuring a user interface layout for the touch-enabled display unit based on the sensor map location information and the sensor data, the user interface layout presenting the N Position computers, the GPS sensor, the IRS sensor, the NAV sensor, and the N FMS sensors, using symbols at respective locations; rendering the user interface layout on the touch-enabled display unit; interpreting a touch input from the touch-enabled display unit to select an Position computer and to select an onboard sensor; calibrating the selected Position computer with the selected onboard sensor responsive to the touch input; modifying the user interface layoutto reflect the calibration; and modifying a displayed range ring on the user interface layout responsive to the calibration.

In another embodiment, a system for calibrating an aircraft position is provided. The system includes: a configuration module operating onboard the aircraft and configured to receive ownship data from ownship data sources including sensor data from a plurality of onboard sensors. Non-limiting examples of the onboard sensors include a global position system (GPS) sensor, an inertial reference system (IRS) sensor, and, a radio navigation (NAV) sensor, and reference sensor map location information for the onboard sensors to generate therefrom a user interface layout for a touch-enabled display; a user input interpretation module operating on the aircraft and configured to process user input at the touch-enabled display with respect to the user interface layout to: determine when a user has selected an Position computer; and determine when the user has selected an onboard sensor; and a calibration module operating on the aircraft and configured to calibrate the selected Position computer with the selected onboard sensor; and a layout modification module operating on the aircraft and operating to determine which aspects of the user interface layout to modify and modify the user interface accordingly, responsive to the calibration of the Position computer with the selected onboard sensor.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

At least one example of the present invention will hereinafter be described in conjunction with the following figures, wherein like numerals denote like elements, and:
FIG. 1 is a block diagram of a system for calibrating an aircraft position by providing touch-enabled selection of onboard sensors on an aircraft, as illustrated in accordance with an exemplary embodiment of the present disclosure;
FIG. 2 is an architectural block diagram of one or more process modules in the system for calibrating an aircraft position by providing touch-enabled selection of onboard sensors on an aircraft, in accordance with an exemplary embodiment of the present disclosure;
FIGS. 3- 14 depict various presentations of information on a graphical user interface layout for a touch display unit, in accordance with an exemplary embodiment of the present disclosure; and
FIG. 15 is a flow chart of a method for calibrating an aircraft position by providing touch-enabled selection of onboard sensors on an aircraft, as may be implemented by the system of FIG. 1, in accordance with an exemplary embodiment of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

As mentioned, in modern avionics systems, generally a position computer uses multiple redundant sensor systems to automatically compute an aircraft position. In scenarios, the crew desires to calibrate the position computer by including or excluding individual sensors from this computation. In these scenarios, they generally must use a user input device and perform a series of operations, navigating back and forth between windows. The human-machine interface that they must interact with for this calibration generally includes a user input device, such as a keyboard, and a separate display device, and the human-machine interaction includes a series of cumbersome operations, navigating back and forth between windows, during which time the human-machine interface is not providing a pilot with the ability to see potential data changes reflected in real time as sensor selections are made.

The embodiments described herein deliver technologically improved systems and methods for calibrating a sensor position on an aircraft having a touch-enabled display unit. Embodiments provide a direct and intuitive, touch-based solution for selection of sensors (or other external references) with immediate visual feedback, including immediate sensor data position updates, in a What You See Is What You Get (WYSIWYG) presentation style. Specifically, embodiments provide a visual depiction of individual position sensors distributed such that their position on a lateral display represents their position relative to the position of the aircraft. Other words, it is like having a map with a position of own ship and position of individual sensors. Accordingly, the described embodiments deliver an objectively improved human-machine interface during sensor calibration that reduces cognitive load for the flight crew.

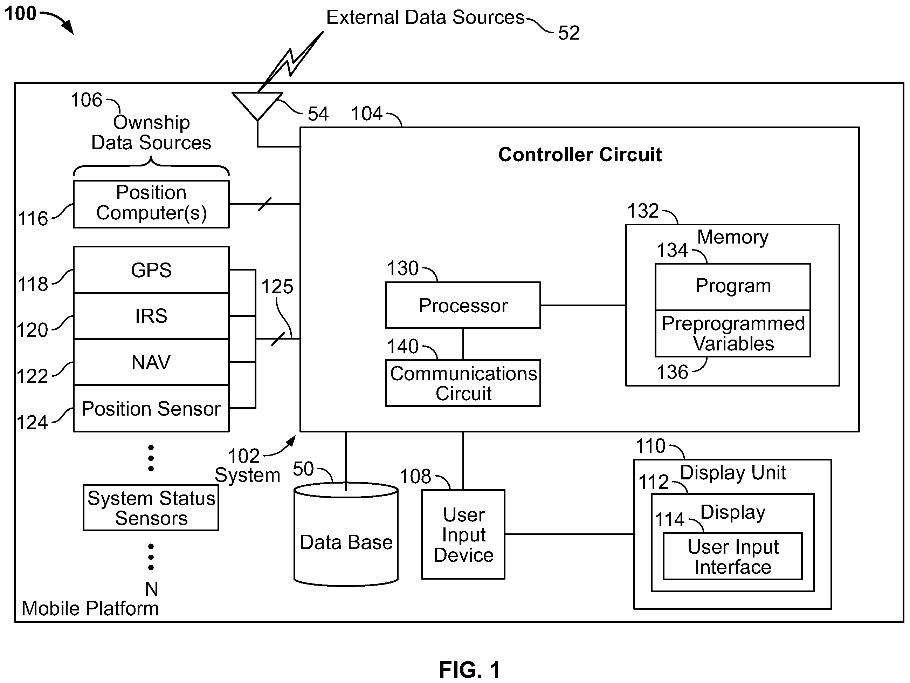

FIG. 1 is a block diagram of a system **102** for calibrating a sensor position on an aircraft having a touch-enabled display unit, as illustrated in accordance with an exemplary and non-limiting embodiment of the present disclosure. The system **102** for computing an aircraft position by providing touch-enabled selection of onboard sensors **(118, 120, 122, 124** may be utilized onboard a mobile platform **100** to provide an aircraft position (shortened herein to "system" **102),** as described herein. In various embodiments, the mobile platform is an aircraft **100,** which carries or is equipped with the system **102.** As schematically depicted in FIG. 1, system **102** includes the following components or subsystems, each of which may assume the form of a single device or multiple interconnected devices: a controller circuit **104** operationally coupled to: at least one display device **110;** computer-readable storage media or memory **132;** an optional input interface **114,** and ownship data sources **106.** The system **102** may be separate from or integrated within: a flight management system (FMS) and/or a flight control system (FCS). The system **102** may also contain a datalink subsystem including an antenna **54,** which may wirelessly transmit data to and receive real-time data and signals from various external sources **(52),** including, each of: traffic, air traffic control (ATC), weather systems, ground stations, and the like.

Although schematically illustrated in FIG. 1 as a single unit, the individual elements and components of the system **102** can be implemented in a distributed manner utilizing any practical number of physically distinct and operatively interconnected pieces of hardware or equipment. When the system **102** is utilized as described herein, the various components of the system **102** will typically all be located onboard the Aircraft **100.**

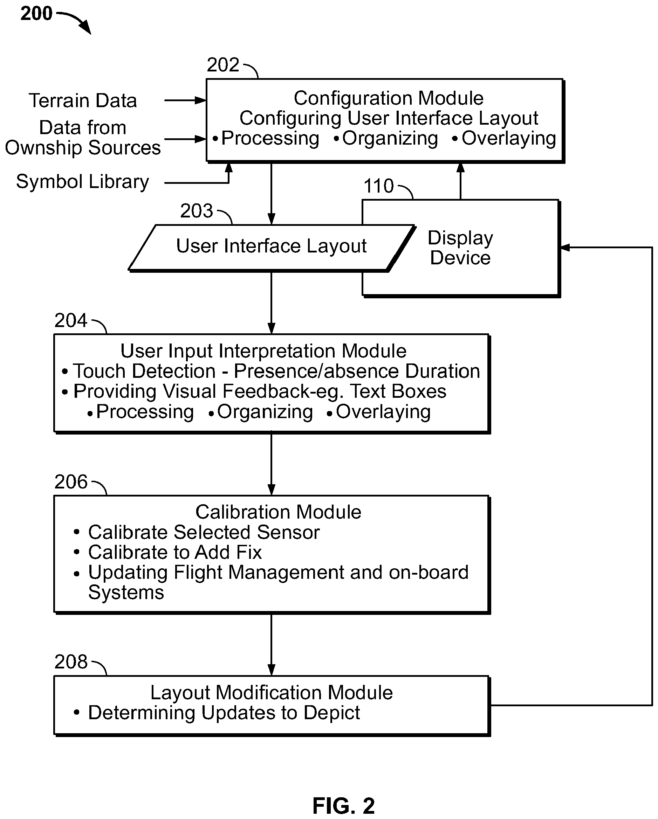

The terms "controller circuit," and "module," as appearing herein, broadly encompass those components utilized to carry-out or otherwise support the processing functionalities of the system **102.** Accordingly, controller circuit **104** and modules of FIG. 2 can encompass or may be associated with a programmable logic array, application specific integrated circuit or other similar firmware, as well as any number of individual processors, flight control computers, navigational equipment pieces, computer-readable memories (including or in addition to memory **132),** power supplies, storage devices, interface cards, and other standardized components. In various embodiments, controller circuit **104** embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit **104** may be programmed with and execute the at least one firmware or software program, for example, program **134** with preprogrammed variables **136,** that embodies an algorithm for calibrating a sensor position on an aircraft having a touch-enabled display unit, to thereby perform the various process steps, tasks, calculations, and control/display functions described herein.

In various embodiments, the controller circuit **104** may utilize a communications circuit **140** to exchange data, including real-time wireless data, with one or more external sources **52** to support operation of the system **102.** In various embodiments, the communications circuit **140** manages bidirectional wireless data exchange over a communications network, such as a public or private network implemented in accordance with one or more communication protocols. An example communication protocol is a Transmission Control Protocol/Internet Protocol architectures or other conventional protocol standards. In various embodiments, the communications circuit **140** manages encryption and mutual authentication techniques, as appropriate, to ensure data security.

Memory **132** is a data storage that can encompass any number and type of storage media suitable for storing computer-readable code or instructions, such as the aforementioned software program **134,** as well as other data generally supporting the operation of the system **102.** Memory **132** may also store preprogrammed variables, such as one or more threshold values, for use by an algorithm embodied in software program **134.** Various embodiments also employ one or more database(s) **50,** another form of storage media that may be integrated with memory **132** or separate from it.

In various embodiments, aircraft-specific parameters and information for aircraft **100** may be stored in the memory **132** or in a database **50** and referenced by the program **134.** Non-limiting examples of aircraft-specific information includes sensor map location information for all available onboard sensors, and the like. As used herein, the sensor map location information includes, for each available onboard sensor used for navigation, a sensor category and sensor location.

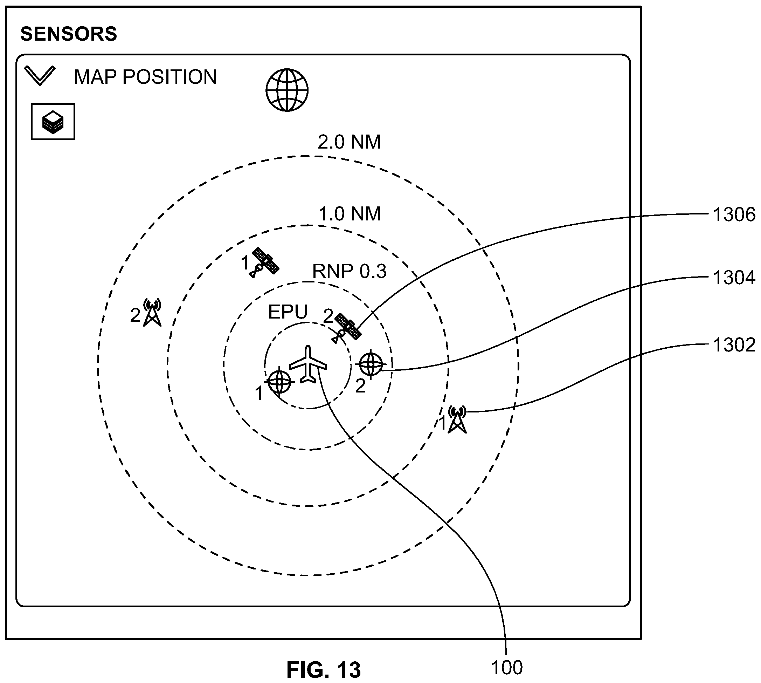

In various embodiments, a symbol library (described in connection with FIG. 13) might be predefined and stored in the database **50** or in the memory **132.**

In various embodiments, two- or three-dimensional terrain and map data may be stored in a database **50,** including airport features data, geographical (terrain), buildings, bridges, and other structures, street maps, and navigational databases, which may be updated on a periodic or iterative basis to ensure data timeliness. This map data may be uploaded into the database **50** at an initialization step and then periodically updated, as directed by either a program **134** update or by an externally triggered update.

Ownship data sources **106** may include system status sensors and one or more position computers **116.** In various embodiments, the position computers **116** are referred to as Flight Management System (FMS) computers **116** or navigators. Ownship data sources **106** also include various onboard sensors used for navigation, and can be categorized. Non-limiting examples of the onboard sensor categories include Global Position System (GPS) sensors **118,** Inertial Reference System (IRS) sensors 120, radio Navigation (NAV) sensors **122,** position sensors **124,** and any other of a plurality of other position sensors. There may be more than one onboard sensor in each category. The position sensor or FMS sensor category, is actually a derived sensor category: In practice, the position computer/FMS **116** performs an algorithm which, for each position computer/FMS **116,** calculates a blended position using other available sensors, such as IRS, GPS, Radio navigation (NAV) etc., considering their integrity and quality, therefore, these sensors may also be referred to herein as a blended position sensor/FMS sensor. Therefore, there is a one to one correspondence of position computers/FMSs **116** to position sensor/FMS sensors **124.** Sensor data provided by the onboard sensors used for navigation may include location and direction/orientation information.

Collectively, ownship data sources **106** supply various types of data or measurements to controller circuit **104** during aircraft flight. In various embodiments, the ownship data sources **106** include onboard systems, onboard status sensors, and onboard inertial sensors. Accordingly, ownship data sources **106** collectively supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight track data, radar altitude data, and geometric altitude data.

In certain embodiments of system **102,** the controller circuit **104** and the other components of the system **102** may be integrated within or cooperate with any number and type of systems commonly deployed onboard an aircraft including, for example, a position sensor/FMS **116,** an Attitude Heading Reference System (AHRS), , and/or an Inertial Reference System (IRS).

With continued reference to FIG. 1, display device **110** can include any number and type of image generating devices on which one or more avionic displays **112** may be produced. When the system **102** is utilized for a manned aircraft, display device **110** may be affixed to the static structure of the aircraft cockpit as, for example, a Head Down Display (HDD) or Head Up Display (HUD) unit. Alternatively, display device **110** may assume the form of a movable display device (e.g., a pilot-worn display device) or a portable display device, such as an Electronic Flight Bag (EFB), a laptop, or a tablet computer carried into the aircraft cockpit by a pilot.

At least one avionic display **112** is generated on display device **110** during operation of the system **102;** the term "avionic display" defined as synonymous with the term "aircraft-related display" and "cockpit display" and encompasses displays generated in textual, graphical, cartographical, and other formats. The system **102** can generate various types of lateral and vertical avionic displays **112** on which map views and symbology, text annunciations, and other graphics pertaining to flight planning are presented for a pilot to view. The display device **110** is configured to continuously render at least a lateral display **112** showing the aircraft **100** at its current location within the map data.

The avionic display **112** generated and controlled by the system **102** can include a user input interface **114,** including graphical user interface (GUI) objects and alphanumerical input displays of the type commonly presented on the screens of MCDUs, as well as Control Display Units (CDUs) generally. Specifically, embodiments of avionic displays **112** include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display.

In various embodiments, a human-machine interface is implemented as an integration of the user input interface **114** and a touch-enabled display device **110,** for example, a touch screen display device. In some embodiments, the human-machine interface includes an integration of the user input interface **114,** a display device **110,** and a user input device **108,** such as a keyboard, or cursor control device. Embodiments of the controller circuit **104** employ various display and graphics systems processes to configure and render a specific user interface layout (FIG. 2, 203) and command and control the display device **110** to render the user interface layout thereon. The user interface layout **203** may include graphical user interface (GUI) objects or elements described herein, including, for example, touch-sensitive labels, symbols, buttons, sliders, and the like, which are used to prompt a user to interact. Accordingly, the human-machine interface of the present invention provides user input, activates respective functions, and provides user feedback, responsive to received user touch screen input.

Turning now to FIG. 2, and with continued reference to FIG. 1, various embodiments of the system **102** may comprise one or more process modules, such as those shown in the architectural block diagram **200.** A configuration module **202** may direct the steps of processing input from the ownship data sources **106** and organizing the data into an avionic display **112;** this includes creating the user interface layout **203** for the user input interface **114,** to have the position computers and onboard sensors used for navigation represented at their respective locations, overlaid on a lateral avionic display and sized to be compatible with the available display device **110.** The configuration module **202** may configure a user interface layout **203** for a touch display unit based on the sensor map location information and the sensor data, the user interface layout **203** presenting the N FMS computers, the GPS sensor, the IRS sensor, the radio NAV sensor, and the N FMS sensors, using symbols at respective locations.

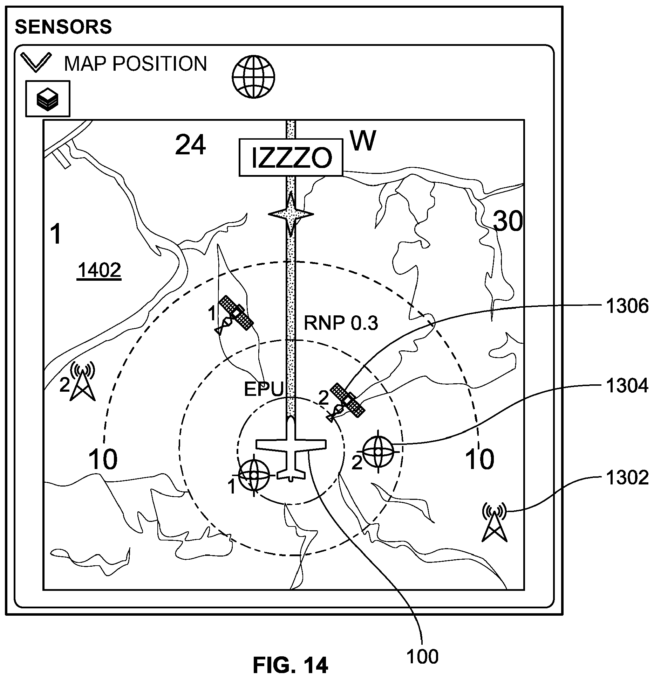

In embodiments that display terrain data, the configuration module **202** may receive the terrain data and render a terrain layer in the background of the user interface layout rendered on the touch-enabled display unit. In embodiments that utilize specific symbols for the various onboard sensors, the configuration module **202** may reference a predefined and stored symbol library and use a first symbol to indicate each global position system (GPS) sensor, a second symbol to represent each inertial reference system (IRS) sensors, and a third symbol to indicate each radio navigation (NAV) sensors; in these embodiments, any blended position sensors on the user interface layout **203** may be indicated with an alphanumeric label, or fourth symbol. The system **102** assures that the first, second, third and fourth symbols are visually distinguishable from each other; in an example, the first symbol, second symbol, third symbol, and fourth symbol include an antenna, a satellite, and a gyroscope, as shown in FIGS 13 and 14. In various embodiments, the symbol selected to represent an onboard sensor is picked such that it intuitively represents a sensor type so that the pilot can recognize it without having to read text.

The system **102** renders the user interface layout on the display device **110.** In various embodiments, the display device **110** is a touch screen display device or touch-enabled display device.

A user input interpretation module **204** may direct various processes of touch detection with respect to the display device **110.** Initially, a touch may be detected in the area **310** for displaying available position computers/FMSs, and the selected FMS is indicated therein. In a first aspect, touch detection may include determining a presence/absence of a finger touch at a location on the user interface layout **203.** In a second aspect, touch detection includes detecting a continuous touch of at least a first duration of time at an indicator of the onboard sensor on the user interface layout **203.** Additionally, touch detection may include: displaying an alphanumeric message to update the selected FMS computer with the onboard sensor upon detection of the touch input; and, determining that the onboard sensor has been selected upon meeting the conditions (i) an expiration of the first duration of time with continuous touch, (ii) followed by the touch ceasing.

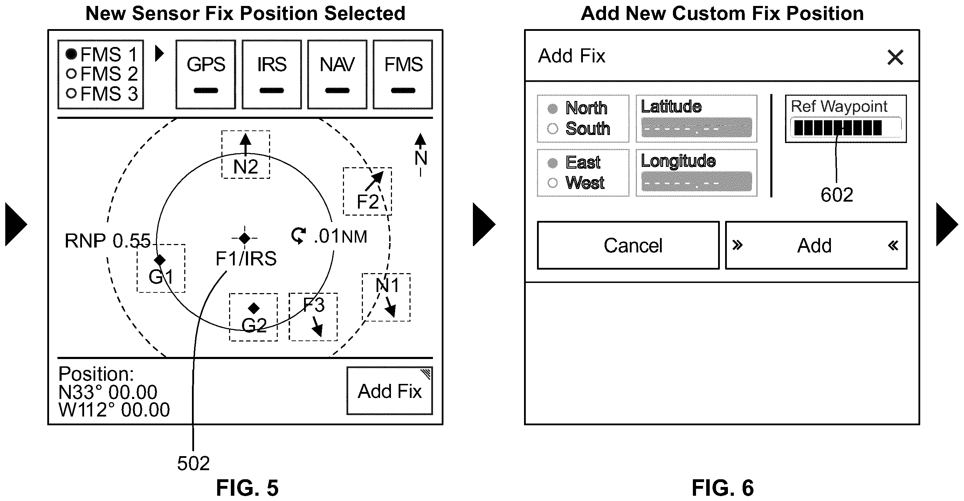

A mapped location of a detected touch may be compared to a predefined sensor assignment or other functional meaning on the user interface layout **203,** as an aspect of user input interpretation. In embodiments that support an "add fix" feature, the user input interpretation module **204** detects that the add fix button has been touch selected, receives additional alphanumeric input at a designated area for the fix (such as is shown in FIG. 6, area **602),** and determines when a user has selected the fix to correlate with the position computer/FMS. The user input interpretation module **204** may interpret touch input from the touch display unit **110** to select an onboard sensor. Output from the user input interpretation module **204** may include a selected position computer/FMS and a selected onboard sensor for calibration. In an embodiment, the output from the user input interpretation module **204** may include a selected position computer/FMS and a fix, or waypoint or other location entered as an "add fix."

The output from the user input interpretation module **204** is received by the calibration module **206;** the calibration module **206** operates by calibrating the selected position computer/FMS computer according the user input, e.g., with the selected onboard sensor responsive to the touch input. Said differently, the calibration module **206** operates by providing a position solution, i.e., by calibrating the position computer/FMS by including or excluding individual sensors per the interpreted user's input. The calibration process can finalize by updating a position computer/FMS and on-board systems with the position solution.

A layout modification module **208** may receive, as input, the updated flight management and/or on-board systems information, determine therefrom which updates to depict on the user interface layout **203,** and provide this input into the display device **110,** thereby modifying the user interface layout **203** to reflect the calibration. The layout modification module **208** may also modify a displayed range ring on the user interface layout **203,** responsive to the calibration.

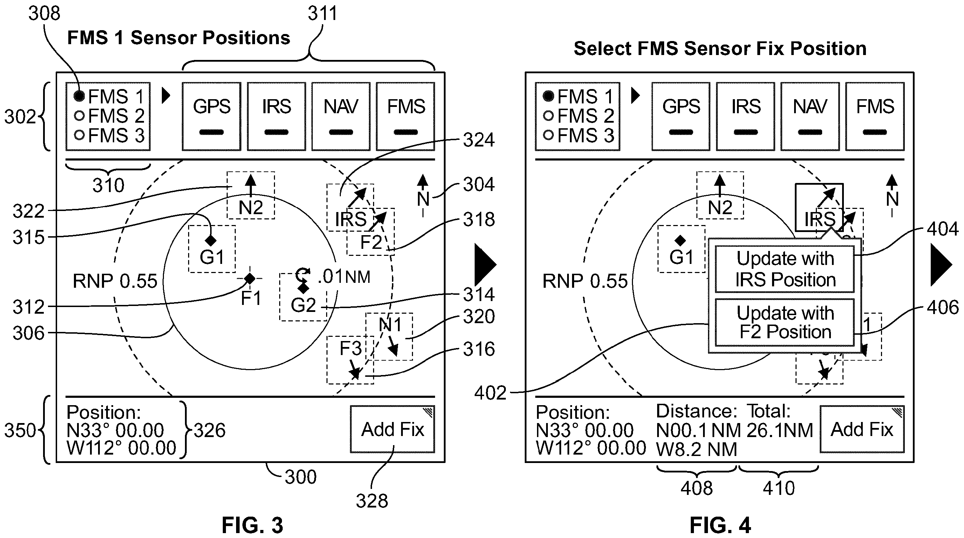

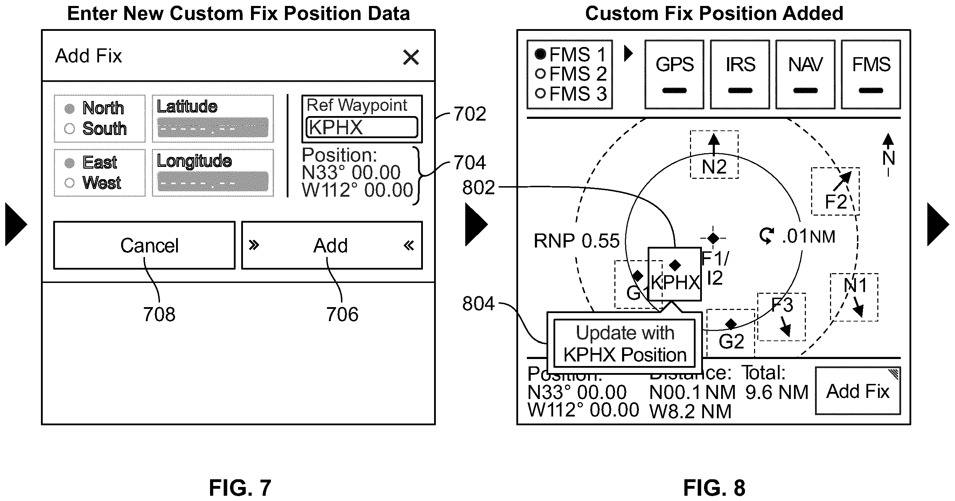

Turning now to FIGS. 3-12, illustrations of the human-machine interface enabled by the user interface layout **203** in various use cases are provided, showing how the technical problem of calibrating the sensor position for an aircraft is objectively improved by the system **102** over available options. In the example embodiments shown in FIGS. 3-12, the system **102** provides a lateral map avionics display **300** in a dedicated area, overlaid with a selection band **302** along the top, and a band along the bottom **350** for additional text and graphical objects. In other embodiments, the location of the selection band and location of the bottom **350** band can differ, so long as their functionality is still provided. A compass indicator **304** is included for visual orientation, and one or more range-rings, such as the depicted **20** nautical mile range ring **306** may be rendered thereon.

An area **310** on the selection band **302** lists available position computers/ FMSs. A remaining area **311** lists onboard sensor categories. In the example, area **310** lists FMS 1, FMS 2 and FMS 3, indicating three position computers or FMSs. Various embodiments include a plurality of onboard sensors for providing respective sensor data, the onboard sensors including a global position system (GPS) sensor, an inertial reference system (IRS) sensor, a radio navigation (NAV) sensor, and, for each of the N FMS computers, a respective FMS sensor (the blended sensors). The system **102** indicates the blended position sensor associated with a selected position computer at a center of the dedicated area and indicates a location of each of the onboard sensors used for navigation in the dedicated area by rendering a respective alphanumeric label and a symbol.

In the example of FIG. 3, FMS 1 is shown selected at **308,** and a corresponding blended position computer sensor is indicated with F1 **(312)** is shown in the center of the range ring **306.** A GPS 1 **(314)** sensor and GPS 2 **(314)** sensor position are depicted, as are blended position F2 **(318),** F3 **(316),** and the positions of radio navigation sensor N1 **(320),** radio navigation sensor N2 **(322),** and an IRS sensor **(324).** Alphanumeric labels are used for onboard sensors in this embodiment. An alphanumeric position **326** is provided for the selected FMS 1 **308.** An add fix button is rendered at **328.** An observer may also note that a diamond symbol is used to indicate position sensors that are on-board (F1, G1, and G2), while an arrow symbol is used to depict position sensors that are off-board; the arrow points in the direction of the sensor location. For example, position sensor N1 **(320)** points down and to the right, which, based on the compass indicator **304,** is south by southeast.

Using FIG. 3 as the starting point, we move to FIG. 4. In FIG. 4, a user wishes to update the FMS 1 with the position of the IRS sensor **(324).** In FIG. 4, 324 and 318 are near each other on the displayed area, so when the user touches the screen, the human-machine interface provided by the system **102** will prompt the user with visual feedback in the form of a text box **402** having both "update with IRS position" **404** and "update with F2 position" **406** text. The user is prompted by these options to slide a finger to select one of the options. In this example, the user slides the finger to highlight the "update with IRS position" text, upon detecting the selection (the processes of the user input interpretation module **204,** including the presence/absence and duration of continuous touch requirements are confirmed), resulting in additional visual feedback on the human-machine interface: the position of the selected sensor is displayed **408,** and the distance to the selected sensor position is displayed **410.** The system **102** determines that selection is complete when, after meeting the selection requirements, the user ceases touching the selected item. When selection is complete, the processes of the calibration module **206** and layout modification module **208** are performed, and FIG. 5 depicts the F1/IRS update at the center of the range ring **306.**

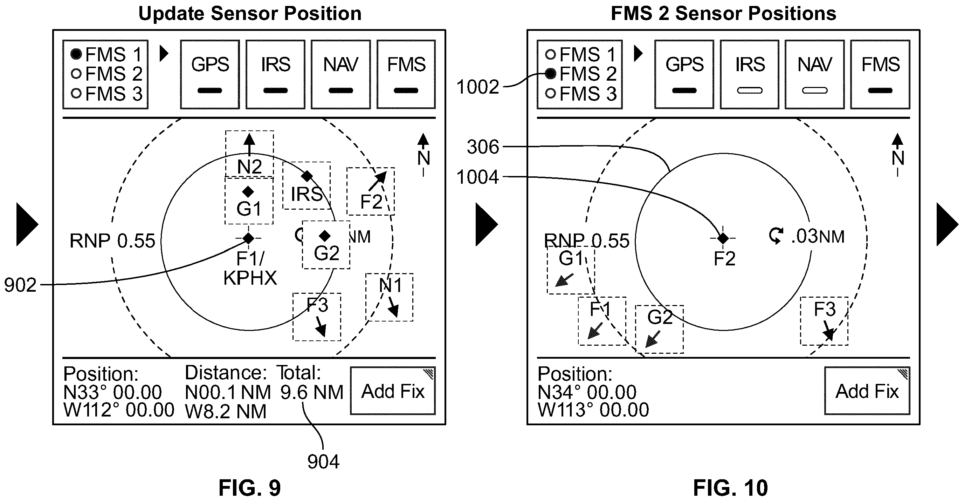

As mentioned, the user may wish to add a fix, and can use the "add fix" button **328** for this function. In FIG. 6, a user-friendly text box **702** may open to prompt the user to enter the fix. In the example, the user has entered a waypoint KPHX at 702 and the system **102** automatically displays the position of the added fix at 704. Once the new fix has been added, the user can add **(706)** or cancel **(708)** the fix with selectable boxes on the interface. Once the user has added the fix, the system **102** updates the interface layout to depict the position of the fix. The user may choose to update the position computer with the newly added fix by selecting it the same way as described above: touching the user interface at the KPHX **802** location, and holding the touch continuously to meet a threshold requirement, until an option for "update with KPHX position" is displayed on the interface. When the finger slides over the "update with KPHX position," and releases, the system **102** determines that it has been selected and performs the update operation as before. FIG. 9 shows this update **(902),** note thatthe distance is updated to 9.6 nautical miles **(904).**

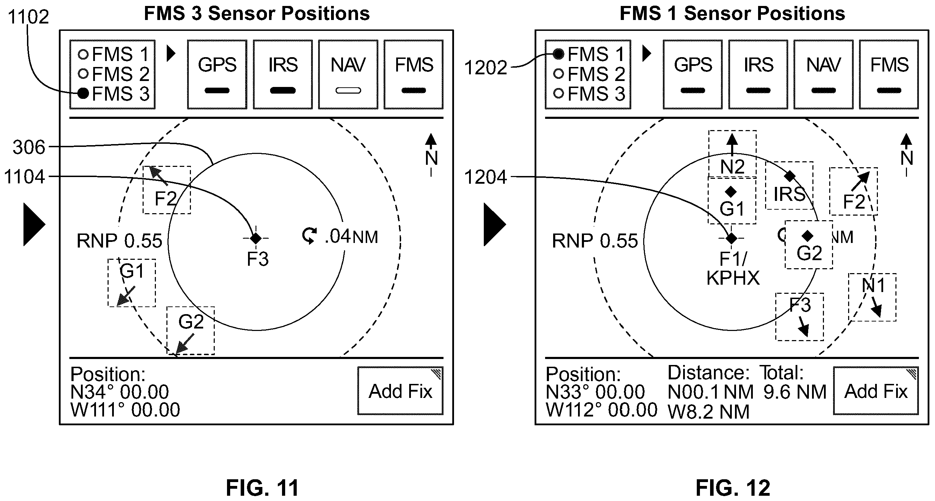

FIG. 10 provides an illustration of selecting the second position computer, or FMS 2 **(1002).** As a result of this selection, the user interface layout **203** has been modified to place the blended F2 in the center of the range ring **306,** and the remaining available sensor positions are depicted with respect to F2 **(1004).** FIG. 11 provides an illustration of selecting the third position computer, or FMS 3 **(1102).** As a result of this selection, the user interface layout **203** has been modified to place the blended F3 in the center of the range ring **306,** and the remaining available sensor positions are depicted with respect to F3 **(1004).** FIG. 12 is included in this example to show that when a user selects FMS 1 again **(1202),** after the sequence illustrated by FIGS. 3-11, the blended sensor position F1/KPHX **(1204)** is displayed, because that reflects the most recent user modification to FMS 1. Had the user modified FMS2 and/or FMS 3, upon selecting them again, the most recent update would show there as well.

As mentioned above, in some embodiments, the system **102** may indicate the position of each sensor by a symbol that is associated with the navigation category of the sensor. In FIG. 13, the ownship aircraft **100** is shown in the center of a couple of concentric range rings in a lateral display area. An antenna symbol **1302,** a gyroscope symbol **1304,** and a satellite symbol **1306** is depicted.

In another mentioned embodiment, terrain data may be received, and a terrain layer may be rendered in the background of the user interface layout **203** rendered on the touch-enabled display unit. By adding the terrain map layer to the user interface layout 203 on the avionics display 112, the use is objectively assisted in correlating an onboard sensor position with geographical features such as lakes, curvature of shore, mountains and curvature of the terrain, cities, rivers, and the like. By providing this terrain map layer, it is much easier and more intuitive for the crew to correctly pick or exclude onboard sensors from being considered in blended or voted position sensor calibration computations.

While not depicted in FIGS. 14, it is to be appreciated that the selection band **302** along the top, and the band along the bottom **350** for additional text and graphical objects is present along with the lateral display areas depicted in FIGS. 13 and 14.

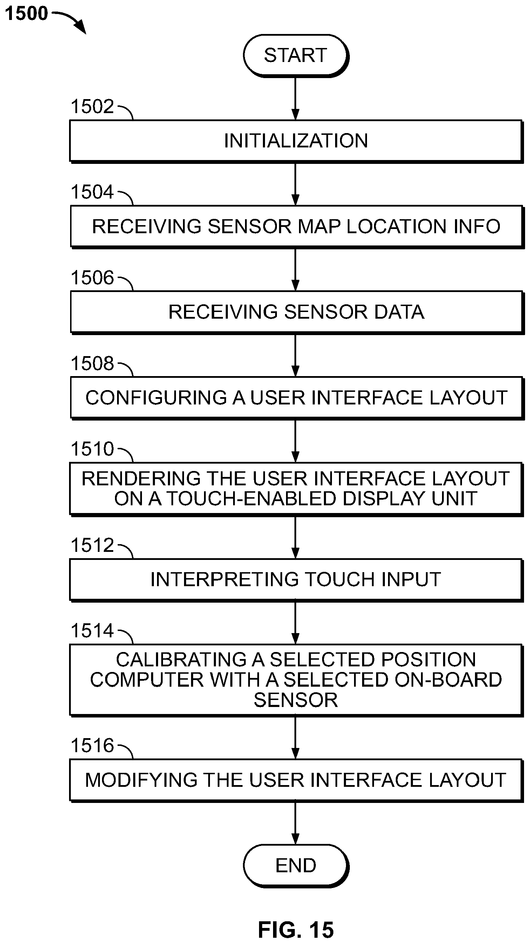

Turning now to FIG. 15, the system **102** described above may be implemented by a processor-executable method **1500** for

computing an aircraft position by providing touch-enabled selection of onboard sensors **(118, 120, 122, 124)** may be utilized onboard a mobile platform **100** to provide an aircraft position (shortened herein to method **1500).** For illustrative purposes, the following description of method **1500** may refer to elements mentioned above in connection with FIGS. 1-2. In practice, portions of method **1500** may be performed by different components of the described system. It should be appreciated that method **1500** may include any number of additional or alternative tasks, the tasks shown in FIG. 15 need not be performed in the illustrated order, and method **1500** may be incorporated into a more comprehensive procedure or method having additional functionality not described in detail herein. Moreover, one or more of the tasks shown in FIG. 15 could be omitted from an embodiment of the method **1500** as long as the intended overall functionality remains intact.

At **1502,** the system **102** is initialized. Initialization may include loading instructions and program **134** into a processor within the controller circuit **104,** as well as, depending on the embodiment, loading map data, aircraft-specific features, and a symbol library into one or more database(s) **50.** At **1504** the sensor map location information for the aircraft is received. At **1506,** the sensor data is received for the onboard sensors used for navigation. At **1508,** the user interface layout is configured. At **1510,** the user interface layout **203** is rendered on a touch enabled display device. At **1512,** the method performs touch interpretation and provides related visual feedback. At **1514** the selected position computer is calibrated with a selected onboard sensor, and at **1516** the user interface layout **203** is modified accordingly. After **1516,** the method may end or return to **1506.**

Thus, enhanced systems and methods for calibrating an aircraft position by providing touch-enabled selection of onboard sensors on an aircraft having a touch-enabled display unit. The provided methods and systems provide an objectively improved human-machine interface with map views, intuitive symbols for onboard sensors, and notifications that provide relevant and time-critical information. The provided enhanced features do not require the pilot to refer back and forth between screens or do any mental distance or location calculations.

Although an exemplary embodiment of the present disclosure has been described above in the context of a fully-functioning computer system (e.g., system **102** described above in conjunction with FIG. 1), those skilled in the art will recognize that the mechanisms of the present disclosure are capable of being distributed as a program product (e.g., an Internet-disseminated program or software application) and, further, that the present teachings apply to the program product regardless of the particular type of computer-readable media (e.g., hard drive, memory card, optical disc, etc.) employed to carry-out its distribution.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements. While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A system (100) for calibrating aircraft position by providing touch-enabled selection of onboard sensors on an aircraft having a touch-enabled display unit (110), the system comprising:
a number N of position computers, N being greater than 1;
a plurality of onboard sensors (124) for providing respective sensor data, the onboard sensors including a global position system (GPS) sensor (118), an inertial reference system (IRS) sensor (120), a radio navigation (NAV) sensor (122), and, for each of the N Position computers, a respective FMS sensor that is a blended position sensor that calculates a blended position using other available sensors;
a controller circuit (104) comprising a processor configured to execute programming instructions stored in a memory, that when executed by the processor cause the controller circuit to:
receive sensor map location information for the onboard sensors;
receive sensor data from the onboard sensors;
configure a user interface layout for the touch-enabled display unit based on the sensor map location information and the sensor data, the user interface layout presenting the N Position computers, the GPS sensor, the IRS sensor, the NAV sensor, and the N FMS sensors, using symbols (302, 311, 312, 314, 316, 318, 320, 322) at respective locations;
render the user interface layout on the touch-enabled display unit;
interpret a touch input from the touch-enabled display unit to select a Position computer and to select an onboard sensor;
calibrate the selected Position computer with the selected onboard sensor responsive to the touch input;
modify the user interface layout to reflect the calibration; and
modify a displayed range ring (306) on the user interface layout responsive to the calibration.

2. The system of claim 1, wherein to interpret the touch input includes detecting a continuous touch of at least a first duration of time at an indicator of the onboard sensor on the user input interface.

3. The system of claim 2, wherein to interpret the touch input the controller circuit is further configured to:
display an alphanumeric message to update the selected Position computer with the onboard sensor upon detection of the touch input; and
determine that the onboard sensor has been selected upon meeting the conditions
(i) an expiration of the first duration of time while the touch input has been continuous,
(ii) followed by the touch input ceasing.

4. The system of claim 1, wherein the GPS sensor is a first GPS sensor, and further comprising a second GPS sensor.

5. The system of claim 1, wherein the IRS sensor is a first IRS sensor, and further comprising a second IRS sensor.

6. The system of claim 1, wherein the NAV sensor is a first NAV sensor, and further comprising a second NAV sensor.

7. The system of claim 1, wherein the user interface layout includes:
a dedicated area;
and wherein the controller circuit is further configured to:
indicate a blended FMS sensor (312) associated with the selected Position computer at a center of the dedicated area; and
indicate, in the dedicated area, a location of each of the onboard sensors by rendering a respective alphanumeric label and a symbol.

8. The system of claim 1, wherein the controller circuit is further configured to use a first symbol to indicate each global position system (GPS) sensor, a second symbol to represent each inertial reference system (IRS) sensor, a third symbol to indicate each navigation (NAV) sensor, and a fourth symbol for each FMS sensor, and wherein the first, second, third and fourth symbols are visually distinguishable from each other.

9. The system of claim 8, wherein the first symbol, second symbol, third symbol, and fourth symbol include an antenna, a satellite, and a gyroscope.

10. The system of claim 1, wherein the controller circuit is further configured to:
receive terrain data; and
render a terrain layer in the background of the user interface layout rendered on the touch-enabled display unit.

11. A processor-implemented method for calibrating an aircraft position on an aircraft having a touch-enabled display unit, the method comprising:
receiving sensor map location information for onboard sensors, the onboard sensors including N flight management system (FMS) computers (116), a geospatial positioning system (GPS) sensor (118), an instrument radar system (IRS) sensor (120), a navigation (NAV) sensor (122), and N FMS sensors (124), wherein N is greater than 1, whereby a FMS sensor is a blended position sensor that calculates a blended position using other available sensors;
receiving sensor data from the onboard sensors;
configuring a user interface layout for the touch-enabled display unit based on the sensor map location information and the sensor data, the user interface layout presenting the N Position computers, the GPS sensor, the IRS sensor, the NAV sensor, and the N FMS sensors, using symbols (302, 311, 312, 314, 316, 318, 320, 322) at respective locations;
rendering the user interface layout on the touch-enabled display unit;
interpreting a touch input from the touch-enabled display unit to select a Position computer and to select an onboard sensor;
calibrating the selected Position computer with the selected onboard sensor responsive to the touch input;
modifying the user interface layout to reflect the calibration; and
modifying a displayed range ring (306) on the user interface layout responsive to the calibration.

12. The method of claim 11, further comprising:
using a first symbol to indicate each global position system (GPS) sensor, a second symbol to represent each inertial reference system (IRS) sensor, a third symbol to indicate each navigation (NAV) sensor, and a fourth symbol for each FMS sensor; and
wherein the first, second, third and fourth symbols are visually distinguishable from each other.

13. The method of claim 12, wherein the first symbol, second symbol, third symbol, and fourth symbol include an antenna, a satellite, and a gyroscope.

14. The method of claim 13, further comprising:
receiving terrain data; and
rendering a terrain layer in the background of the user interface layout on the touch-enabled display unit.

15. The method of claim 14, further comprising:
detecting a touch input that is continuous for at least a first duration of time at an indicator of the onboard sensor on the user input interface;
displaying an alphanumeric message to update the selected Position computer with the onboard sensor upon detection of the touch input; and
determining that the onboard sensor has been selected upon meeting the conditions (i) expiration of the first duration of time with the touch input being continuous, (ii) followed by the touch input ceasing.

## Patentansprüche

1. System (100) zur Kalibrierung einer Flugzeugposition durch Bereitstellen einer berührungsfähigen Auswahl von Bordsensoren an einem Flugzeug, das eine berührungsbefähigte Anzeigeeinheit (110) aufweist, wobei das System umfasst:
eine Anzahl N von Positionscomputern, wobei N größer als 1 ist;
eine Mehrzahl von Bordsensoren (124) zum Bereitstellen jeweiliger Sensordaten, wobei die Bordsensoren einen globalen Positionssystem(GPS, global position system)-Sensor (118), einen Trägheitsreferenzsystem(IRS, inertial reference system)-Sensor (120), einen Funknavigations(NAV, radio navigation)-Sensor (122) und für jeden der N Positionscomputer einen jeweiligen FMS-Sensor einschließen, der ein Mischpositionssensor ist, der eine Mischposition unter Verwendung anderer verfügbarer Sensoren berechnet;
eine Steuerschaltung (104), die einen Prozessor umfasst, der konfiguriert ist, um in einem Speicher gespeicherte Programmieranweisungen auszuführen, die beim Ausführen durch den Prozessor die Steuerschaltung zu Folgendem veranlassen:
Empfangen von Sensorkartenstandortinformationen für die Bordsensoren;
Empfangen von Sensordaten von den Bordsensoren;
Konfigurieren eines Benutzeroberflächenlayouts für die berührungsfähige Anzeigeeinheit basierend auf den Sensorkartenstandortinformationen und den Sensordaten, wobei das Benutzeroberflächenlayout die N Positionscomputer, den GPS-Sensor, den IRS-Sensor, den NAV-Sensor und die N FMS-Sensoren unter Verwendung von Symbolen (302, 311, 312, 314, 316, 318, 320, 322) an jeweiligen Standorten darstellt;
Wiedergeben des Benutzeroberflächenlayouts auf der berührungsfähigen Anzeigeeinheit;
Interpretieren einer Berührungseingabe von der berührungsfähigen Anzeigeeinheit, um einen Positionscomputer auszuwählen und um einen Bordsensor auszuwählen;
Kalibrieren des ausgewählten Positionscomputers mit dem ausgewählten Bordsensor als Reaktion auf die Berührungseingabe;
Modifizieren des Benutzeroberflächenlayouts, um die Kalibrierung widerzuspiegeln; und
Modifizieren eines angezeigten Entfernungsrings (306) auf dem Benutzeroberflächenlayout als Reaktion auf die Kalibrierung.

2. System nach Anspruch 1, wobei das Interpretieren die Berührungseingabe das Detektieren einer kontinuierlichen Berührung von mindestens einer ersten Zeitdauer an einem Indikator des Bordsensors auf der Benutzereingabeoberfläche einschließt.

3. System nach Anspruch 2, wobei das Interpretieren die Berührungseingabe der Steuerschaltung ferner zu Folgendem konfiguriert ist:
Anzeigen einer alphanumerischen Nachricht zum Aktualisieren des ausgewählten Positionscomputers mit dem Bordsensor nach Detektion der Berührungseingabe; und
Bestimmen, dass der Bordsensor ausgewählt wurde, nachdem die Bedingungen (i) eines Ablaufs der ersten Zeitdauer, während die Berührungseingabe kontinuierlich war, (ii) gefolgt von der Beendigung der Berührungseingabe erfüllt sind.

4. System nach Anspruch 1, wobei der GPS-Sensor ein erster GPS-Sensor ist, und ferner einen zweiten GPS-Sensor umfasst.

5. System nach Anspruch 1, wobei der IRS-Sensor ein erster IRS-Sensor ist, und ferner einen zweiten IRS-Sensor umfasst.

6. System nach Anspruch 1, wobei der NAV-Sensor ein erster NAV-Sensor ist, und ferner einen zweiten NAV-Sensor umfasst.

7. System nach Anspruch 1, wobei das Benutzeroberflächenlayout einschließt:
einen dedizierten Bereich;
und wobei die Steuerschaltung ferner zu Folgendem konfiguriert ist:
Angeben eines Misch-FMS-Sensors (312), der dem ausgewählten Positionscomputer zugeordnet ist, in einem Zentrum des dedizierten Bereichs; und
Angeben eines Standorts von jedem der Bordsensoren im dedizierten Bereich durch Wiedergeben einer entsprechende alphanumerische Bezeichnung und eines Symbols.

8. System nach Anspruch 1, wobei die Steuerschaltung ferner konfiguriert ist, um ein erstes Symbol zum Angeben jedes globalen Positionssystem(GPS, global position system)-Sensors, ein zweites Symbol zum Darstellen jedes Trägheitsreferenzsystem(IRS, inertial reference system)-Sensors, ein drittes Symbol zum Angeben jedes Navigations(NAV)-Sensors und ein viertes Symbol für jeden FMS-Sensor zu verwenden, und wobei das erste, zweite, dritte und vierte Symbol visuell voneinander unterscheidbar sind.

9. System nach Anspruch 8, wobei das erste Symbol, das zweite Symbol, das dritte Symbol und das vierte Symbol eine Antenne, einen Satelliten und ein Gyroskop einschließen.

10. System nach Anspruch 1, wobei die Steuerschaltung ferner zu Folgendem konfiguriert ist:
Empfangen von Geländedaten; und
Wiedergeben einer Geländeschicht im Hintergrund des Benutzeroberflächenlayouts, das auf der berührungsfähigen Anzeigeeinheit wiedergegeben wird.

11. Prozessorimplementiertes Verfahren zum Kalibrieren einer Flugzeugposition an einem Flugzeug, das eine berührungsfähige Anzeigeeinheit aufweist, wobei das Verfahren umfasst:
Empfangen von Sensorkartenstandortinformationen für Bordsensoren, wobei die Bordsensoren N Flugsicherungssystem(FMS, flight management system)-Computer (116), einen geospatialen Positionsbestimmungssystem(GPS, geospatial positioning system)-Sensor (118), einen Instrumentenradarsystem(IRS, instrument radar system)-Sensor (120), einen Navigations(NAV)-Sensor (122) und N FMS-Sensoren (124) einschließen, wobei N größer ist als 1, wobei ein FMS-Sensor ein Mischpositionssensor ist, der eine Mischposition unter Verwendung anderer verfügbarer Sensoren berechnet;
Empfangen von Sensordaten von den Bordsensoren;
Konfigurieren eines Benutzeroberflächenlayouts für die berührungsfähige Anzeigeeinheit basierend auf den Sensorkartenstandortinformationen und den Sensordaten, wobei das Benutzeroberflächenlayout die N Positionscomputer, den GPS-Sensor, den IRS-Sensor, den NAV-Sensor und die N FMS-Sensoren unter Verwendung von Symbolen (302, 311, 312, 314, 316, 318, 320, 322) an jeweiligen Standorten darstellt;
Wiedergeben des Benutzeroberflächenlayouts auf der berührungsfähigen Anzeigeeinheit;
Interpretieren einer Berührungseingabe von der berührungsfähigen Anzeigeeinheit, um einen Positionscomputer auszuwählen und um einen Bordsensor auszuwählen;
Kalibrieren des ausgewählten Positionscomputers mit dem ausgewählten Bordsensor als Reaktion auf die Berührungseingabe;
Modifizieren des Benutzeroberflächenlayouts, um die Kalibrierung widerzuspiegeln; und
Modifizieren eines angezeigten Bereichsring (306) auf dem Benutzeroberflächenlayout als Reaktion auf die Kalibrierung.

12. Verfahren nach Anspruch 11, ferner umfassend:
Verwenden eines ersten Symbols zum Angeben jedes globalen Positionssystem(GPS, global position system)-Sensors, eines zweiten Symbols zum Darstellen jedes Trägheitsreferenzsystem(IRS, inertial reference system)-Sensors, eines dritten Symbols zum Angeben jedes Navigations (NAV)-Sensors und eines vierten Symbols für jeden FMS-Sensor; und
wobei das erste, zweite, dritte und vierte Symbol visuell voneinander unterscheidbar sind.

13. Verfahren nach Anspruch 12, wobei das erste Symbol, das zweite Symbol, das dritte Symbol und das vierte Symbol eine Antenne, einen Satelliten und ein Gyroskop einschließen.

14. Verfahren nach Anspruch 13, ferner umfassend:
Empfangen von Geländedaten; und
Wiedergeben einer Geländeschicht im Hintergrund des Benutzeroberflächenlayouts auf der berührungsfähigen Anzeigeeinheit.

15. Verfahren nach Anspruch 14, ferner umfassend:
Detektieren einer Berührungseingabe, die für mindestens eine erste Zeitdauer andauert, an einem Indikator des Bordsensors auf der Benutzereingabeoberfläche;
Anzeigen einer alphanumerischen Nachricht zum Aktualisieren des ausgewählten Positionscomputers mit dem Bordsensor nach Detektion der Berührungseingabe; und
Bestimmen, dass der Bordsensor ausgewählt wurde, nachdem die Bedingungen (i) Ablauf der ersten Zeitdauer, wobei die Berührungseingabe kontinuierlich ist, (ii) gefolgt von der Beendigung der Berührungseingabe erfüllt sind.

## Revendications

1. Système (100) d'étalonnage de position d'aéronef par fourniture d'une sélection tactile de capteurs embarqués sur un aéronef comportant une unité d'affichage tactile (110), le système comprenant :
un nombre N de calculateurs de position, N étant supérieur à 1 ;
une pluralité de capteurs embarqués (124), permettant de fournir des données de capteurs respectives, les capteurs embarqués comportant un capteur de système mondial de localisation (GPS) (118), un capteur de système inertiel de référence (IRS) (120), un capteur de radionavigation (NAV) (122) et, pour chacun des N calculateurs de position, un capteur respectif, c'est-à-dire un capteur de position mixte calculant une position mixte à l'aide d'autres capteurs disponibles ;
un circuit contrôleur (104) comprenant un processeur configuré pour exécuter des instructions de programmation stockées dans une mémoire qui, lorsqu'elles sont exécutées par le processeur, amènent le circuit contrôleur à :
recevoir des informations d'emplacement de carte de capteurs pour les capteurs embarqués ;
recevoir des données de capteur à partir des capteurs embarqués ;
configurer une disposition d'interface utilisateur pour l'unité d'affichage tactile d'après des informations d'emplacement de carte de capteurs et des données de capteurs, la disposition d'interface utilisateur présentant les N calculateurs de position, le capteur de GPS, le capteur d'IRS, le capteur de NAV et les N capteurs de FMS, à l'aide de symboles (302, 311, 312, 314, 316, 318, 320, 322) à des emplacements respectifs ;
restituer la disposition d'interface utilisateur sur l'unité d'affichage tactile ;
interpréter une entrée tactile de l'unité d'affichage tactile pour sélectionner un calculateur de position et pour sélectionner un capteur embarqué ;
étalonner le calculateur de position sélectionné avec le capteur embarqué sélectionné en réponse à l'entrée tactile ;
modifier la disposition d'interface utilisateur pour refléter l'étalonnage ; et
modifier un marqueur de distance affiché (306) sur la disposition d'interface utilisateur en réponse à l'étalonnage.

2. Système selon la revendication 1, dans lequel l'interprétation de l'entrée tactile comporte la détection d'un appui continu d'au moins une première durée au niveau d'un indicateur du capteur embarqué sur l'interface d'entrée utilisateur.

3. Système selon la revendication 2, dans lequel, pour interpréter l'entrée tactile, le circuit contrôleur est en outre configuré pour :
afficher un message alphanumérique permettant de mettre à jour le calculateur de position sélectionné avec le capteur embarqué lors de la détection de l'entrée tactile ; et
déterminer que le capteur embarqué a été sélectionné lorsque les conditions suivantes sont remplies : (i) une expiration de la première durée pendant laquelle l'entrée tactile a été continue, (ii) suivie de la fin de la saisie tactile.

4. Système selon la revendication 1, dans lequel le capteur de GPS est un premier capteur de GPS et comprenant en outre un second capteur de GPS.

5. Système selon la revendication 1, dans lequel le capteur d'IRS est un premier capteur d'IRS et comprenant en outre un second capteur d'IRS.

6. Système selon la revendication 1, dans lequel le capteur de NAV est un premier capteur de NAV et comprenant en outre un second capteur de NAV.

7. Système selon la revendication 1, dans lequel la disposition d'interface utilisateur comporte :
un espace dédié ;
et dans lequel le circuit contrôleur est en outre configuré pour :
indiquer un capteur de FMS mixte (312) associé au calculateur de position sélectionné au centre de la zone dédiée ; et
indiquer, dans la zone dédiée, un emplacement de chacun des capteurs embarqués en restituant une étiquette alphanumérique respective et un symbole.

8. Système selon la revendication 1, dans lequel le circuit contrôleur est en outre configuré pour utiliser un premier symbole pour indiquer chaque capteur de système mondial de localisation (GPS), un deuxième symbole pour représenter chaque capteur de système inertiel de référence (IRS), un troisième symbole pour indiquer chaque capteur de navigation (NAV) et un quatrième symbole pour chaque capteur de FMS et dans lequel les premier, deuxième, troisième et quatrième symboles se distinguent visuellement les uns des autres.

9. Système selon la revendication 8, dans lequel le premier symbole, le deuxième symbole, le troisième symbole et le quatrième symbole comportent une antenne, un satellite et un gyroscope.

10. Système selon la revendication 1, dans lequel le circuit contrôleur est en outre configuré pour :
recevoir des données de terrain ; et
présenter une couche de terrain en arrière-plan de la disposition d'interface utilisateur restituée sur l'unité d'affichage tactile.

11. Procédé mis en oeuvre par processeur pour l'étalonnage d'une position d'aéronef sur un aéronef comportant une unité d'affichage tactile, le procédé comprenant :
la réception d'informations d'emplacement de carte de capteurs pour des capteurs embarqués, les capteurs embarqués comportant N ordinateurs de système de gestion de vol (FMS) (116), un capteur de système mondial de localisation (GPS) (118), un capteur de système radar d'instrument (IRS) (120), un capteur de navigation (NAV) (122) et N capteurs de FMS (124), dans lequel N est supérieur à 1, ce qui permet à un capteur de FMS, qui est un capteur de position mixte, de calculer une position mixte à l'aide d'autres capteurs disponibles ;
la réception de données de capteurs à partir des capteurs embarqués ;
la configuration d'une disposition d'interface utilisateur pour l'unité d'affichage tactile d'après les informations d'emplacement de carte de capteurs et les données de capteurs, la disposition d'interface utilisateur présentant les N calculateurs de position, le capteur de GPS, le capteur d'IRS, le capteur de NAV et les N capteurs de FMS, à l'aide de symboles (302, 311, 312, 314, 316, 318, 320, 322) à des emplacements respectifs ;
la restitution de la disposition d'interface utilisateur sur l'unité d'affichage tactile ;
l'interprétation d'une entrée tactile provenant de l'unité d'affichage tactile pour sélectionner un calculateur de position et pour sélectionner un capteur embarqué ;
l'étalonnage du calculateur de position sélectionné par le capteur embarqué sélectionné en réponse à l'entrée tactile ;
la modification de la disposition d'interface utilisateur pour refléter l'étalonnage ; et
la modification d'un marqueur de distance affiché (306) sur la disposition d'interface utilisateur en réponse à l'étalonnage.

12. Procédé selon la revendication 11, comprenant en outre :
l'utilisation d'un premier symbole pour indiquer chaque capteur de système mondial de localisation (GPS), d'un deuxième symbole pour représenter chaque capteur de système inertiel de référence (IRS), d'un troisième symbole pour indiquer chaque capteur de navigation (NAV) et un quatrième symbole pour chaque capteur de FMS ; et
dans lequel les premier, deuxième, troisième et quatrième symboles se distinguent visuellement les uns des autres.

13. Procédé selon la revendication 12, dans lequel le premier symbole, le deuxième symbole, le troisième symbole et le quatrième symbole comportent une antenne, un satellite et un gyroscope.

14. Procédé selon la revendication 13, comprenant en outre :
la réception de données de terrain ; et
la restitution d'une couche de terrain en arrière-plan de la disposition d'interface utilisateur sur l'unité d'affichage tactile.

15. Procédé selon la revendication 14, comprenant en outre :
la détection d'une entrée tactile qui est continue pendant au moins une première durée au niveau d'un indicateur du capteur embarqué sur l'interface d'entrée utilisateur ;
l'affichage d'un message alphanumérique pour mettre à jour le calculateur de position sélectionné avec le capteur embarqué lors de la détection de l'entrée tactile ; et
la détermination que le capteur embarqué a été sélectionné lors de la vérification des conditions suivantes : (i) expiration de la première durée pendant laquelle l'entrée tactile est continue, (ii) suivie de la fin de l'entrée tactile.
